# FASCICULE DE BREVET EUROPEEN

(11) **EP 2 785 520 B1**
(45) Date de publication et mention de la délivrance du brevet: **30.03.2016**
(21) Numéro de dépôt: 12806573.7
(22) Date de dépôt: 26.11.2012
(51) Int. Cl.: C04B 35/80, B29D 99/00, B29C 70/24, B29L 31/08, F01D 5/28, B29B 11/16, C04B 35/00, C04B 35/628

(54) **PROCEDE DE FABRICATION D'UNE AUBE DE TURBOMACHINE EN MATERIAU COMPOSITE A PLATES-FORMES INTEGREES**
VERFAHREN ZUR HERSTELLUNG EINER TURBOMASCHINENSCHAUFEL AUS EINEM VERBUNDMATERIAL UND MIT INTEGRIERTEN PLATTFORMEN
METHOD FOR PRODUCING A TURBOMACHINE VANE MADE FROM COMPOSITE MATERIAL AND INCLUDING INTEGRATED PLATFORMS

(30) Priorité: 01.12.2011 FR 1103663
(43) Date de publication de la demande: 08.10.2014
(73) Titulaire: HERAKLES, 33185 Le Haillan (FR); SNECMA, 75015 Paris (FR)
(72) Inventeur: FREMONT, Elric, F-33700 Merignac (FR); NUNEZ, Romain, F-33127 Martignas sur Jalles (FR); MASSOT, Max, F-66720 LATOUR-DE-FRANCE (FR)
(74) Mandataire: Desormiere, Pierre-Louis
(86) Numéro de dépôt international: PCT/FR2012/052723
(87) Numéro de publication internationale: WO 2013/079860

(56) Documents cités:
- FR-A1- 2 939 129
- FR-A1- 2 943 942
- FR-A1- 2 956 152
- US-A1- 2003 185 673

## Description

### Arrière-plan de l'invention

L'invention se rapporte aux turbines ou compresseurs pour turbomachines, notamment pour turbomoteurs aéronautiques ou turbines industrielles et vise plus particulièrement la fabrication d'une aube de turbomachine à plates-formes intérieure et extérieure intégrées pour distributeur de turbine ou redresseur de compresseur.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, FR 2 939 129, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans le document WO 2010/146288.

### Objet et résumé de l'invention

L'invention a pour but de fournir un procédé simplifié de réalisation d'une aube de turbomachine en matériau composite ayant une pale solidaire de plates-formes intérieure et extérieure.

Ce but est atteint grâce à un procédé comportant :
- la formation par tissage multicouches d'une ébauche fibreuse ayant une direction longitudinale correspondant à celle de l'aube à réaliser et comprenant dans son épaisseur une première partie avec plusieurs couches de fils liées entre elles par tissage, une deuxième partie tissée et une troisième partie tissée, la première partie étant située entre la deuxième partie et la troisième partie auxquelles elle est reliée par tissage sur une partie seulement de sa dimension longitudinale,
- la formation, à partir de l'ébauche fibreuse, d'une préforme de l'aube à réaliser, par dépliage, de part et d'autre de la première partie, de segments de la deuxième partie et de la troisième partie non liés à la première partie, par mise en forme de la première partie pour former une partie de préforme pour la pale de l'aube à réaliser et par mise en forme des segments dépliés de la deuxième partie et de la troisième partie pour former des parties de préforme pour les plates-formes intérieure et extérieure de l'aube à fabriquer, et
- la densification de la préforme d'aube par une matrice pour obtenir une aube en matériau composite à plates-formes intérieure et extérieure intégrées.

Selon un mode de réalisation, la première partie de l'ébauche présente une zone interne de déliaison entre deux couches de fils adjacentes qui s'étend sur toute la dimension longitudinale de la première partie de l'ébauche et s'ouvre uniquement aux extrémités longitudinales de la première partie de l'ébauche de manière, après mise en forme, à former une partie de préforme pour la pale creuse.

Selon un mode particulier de réalisation, les segments de la deuxième partie et de la troisième partie de l'ébauche non liés à la première partie sont situés dans des parties d'extrémité longitudinale de la deuxième partie et de la troisième partie de l'ébauche.

Selon un autre mode particulier de réalisation, les deuxième et troisième parties de l'ébauche sont liées par tissage à la première partie de l'ébauche dans des parties d'extrémité longitudinale et les segments de la deuxième partie et de la troisième partie de l'ébauche non liés à la première partie de l'ébauche s'étendent entre lesdites parties d'extrémité longitudinale.

Selon une particularité du procédé, la partie de préforme pour la pale a une largeur inférieure à celles des parties de préforme pour les plates-formes intérieure et extérieure et l'excédent en largeur de la première partie de l'ébauche est éliminé par découpe pour la mise en forme de la partie de préforme pour la pale tout en laissant subsister une liaison entre la deuxième partie et la troisième partie de l'ébauche, via une portion de la première partie de l'ébauche, sur toute la largeur de l'ébauche, le long des raccordements desdits segments avec le reste de l'ébauche.

Selon une autre particularité du procédé, pour la réalisation d'une aube de distributeur de turbine ou de redresseur de compresseur, l'on forme la préforme de l'aube avec un prolongement extérieur s'étendant au-delà de la partie de préforme pour la plate-forme extérieure du côté extérieur de celle-ci et, lors de la réalisation de la préforme de l'aube, l'on met en forme le prolongement extérieur pour former une partie de préforme pour une partie de montage dans un carter de turbine ou de compresseur.

Selon encore une autre particularité du procédé, pour la réalisation d'une aube de distributeur de turbine ou de redresseur de compresseur, l'on forme la préforme de l'aube avec un prolongement intérieur s'étendant en-deçà de la partie de préforme pour une plate-forme intérieure, du côté intérieur de celle-ci et, lors de la réalisation de la préforme de l'aube, l'on met en forme le prolongement intérieur pour former une partie de préforme pour une partie d'accrochage.

### Brève description des dessins

L'invention sera mieux comprise à la lecture de la description faite ci-après, à titre indicatif mais non limitatif, en référence aux dessins annexés sur lesquels :
- la figure 1 est une vue schématique en perspective d'une aube de turbomachine ;
- la figure 2 est une vue schématique en plan d'une ébauche fibreuse tissée destinée à la réalisation d'une préforme fibreuse pour une aube du type de celle de la figure 1 ;
- la figure 3 est une vue latérale de l'ébauche de la figure 2 ;
- la figure 4 est une vue schématique en coupe selon le plan IV-IV de la figure 2 ;
- les figures 5 et 6 sont des vues schématiques à échelle agrandie de plans de tissage de l'ébauche de la figure 2 vue en coupe selon les plans V-V et VI-VI de la figure 2 ;
- les figures 7 à 9 sont des vues schématiques montrant des étapes de la réalisation d'une préforme d'aube à partir de l'ébauche fibreuse des figures 2 à 6 ;
- la figure 10 est une vue schématique en plan d'un autre mode de réalisation d'une ébauche fibreuse tissée destinée à la réalisation d'une préforme fibreuse pour une aube du type de celle de la figure 1 ;
- la figure 11 est une vue latérale de l'ébauche de la figure 10 ;
- la figure 12 est une vue schématique en coupe selon le plan XII-XII de la figure 10 ;
- les figures 13 à 15 sont des vues schématiques montrant des étapes de réalisation d'une préforme d'aube à partir de l'ébauche fibreuse des figures 10 à 12 ; et
- la figure 16 est une vue partielle montrant une variante de réalisation de l'aube de la figure 1.

### Description détaillée de modes de réalisation

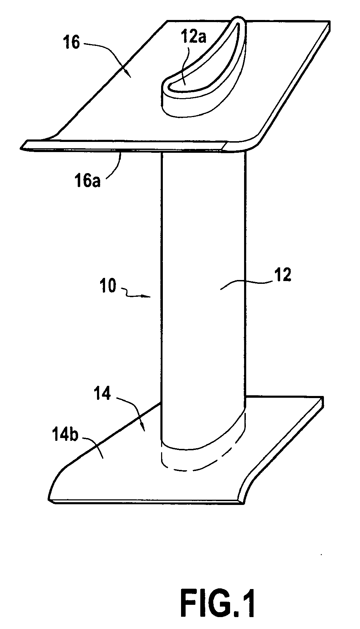

La figure 1 montre très schématiquement une aube 10, par exemple une aube fixe de distributeur de turbine d'une turbomachine aéronautique. L'aube 10 comprend une pale 12 et des plates-formes intérieure 14 et extérieure 16.

Dans tout le texte, les termes "intérieur" et "extérieur" sont utilisés en référence à la position radiale par rapport à l'axe de la turbomachine.

La face extérieure 14b de la plate-forme 14 et la face intérieure 16a de la plate-forme 16 sont destinées à délimiter la veine d'écoulement de gaz dans la turbine après montage de l'aube 10 dans un carter de turbine.

La pale 12 s'étend entre les plates-formes 14 et 16, dont elle est solidaire et, à ses extrémités, fait saillie du côté intérieur de la plate-forme 14 et du côté extérieur de la plate-forme 16. Dans l'exemple illustré, la pale 12 est creuse avec un passage interne longitudinal 12a qui s'étend tout le long de la pale et débouche à ses deux extrémités. De façon bien connue, le passage 12a est notamment destiné à permettre le passage d'un flux d'air de refroidissement.

Dans l'exemple illustré, les plates-formes 14, 16 s'étendent entre leurs extrémités amont et aval suivant des directions générales qui forment des angles non nuls par rapport à un plan normal à la direction longitudinale de la pale 12.

Dans tout le texte, les termes amont et aval sont utilisés en référence au sens d'écoulement de flux dans la turbomachine.

L'aube 10 est en matériau composite. Sa fabrication comprend la formation d'une préforme fibreuse ayant une forme correspondant à celle de l'aube et la densification de la préforme par une matrice.

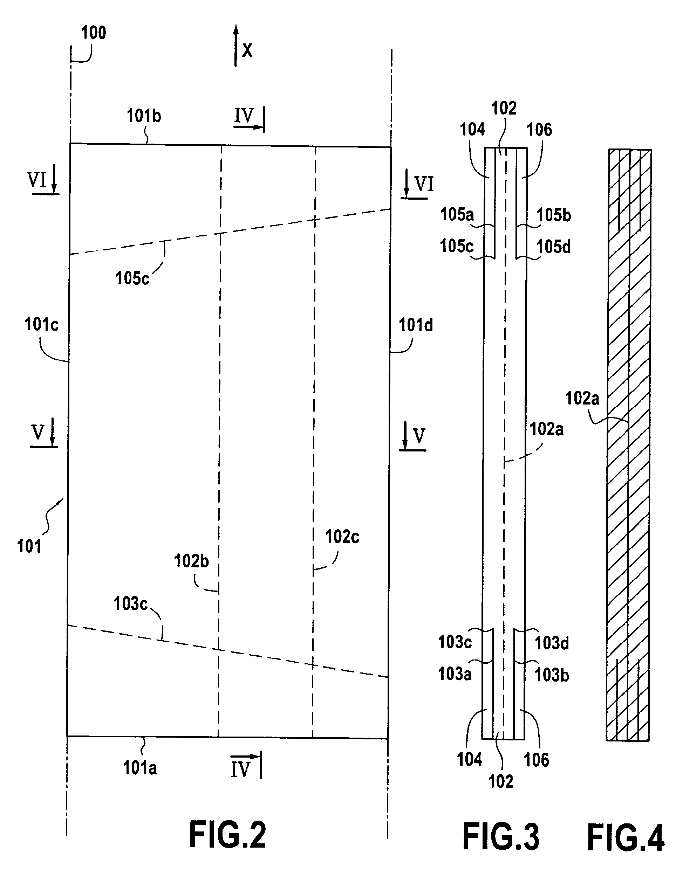

La figure 2 montre en plan une ébauche fibreuse 101 à partir de laquelle une préforme fibreuse de l'aube 10 peut être formée.

L'ébauche 101 est obtenue à partir d'une bande 100 tissée par tissage tridimensionnel (3D) ou multicouches, la bande 100 s'étendant de façon générale dans une direction X correspondant à la direction longitudinale de l'aube à fabriquer. Le tissage est réalisé par exemple avec des fils de chaîne s'étendant dans la direction X, étant noté qu'un tissage avec des fils de trame s'étendant dans cette direction est également possible. Une pluralité d'ébauches 101 peuvent être tissées l'une à la suite de l'autre dans la direction X. On peut aussi tisser simultanément plusieurs rangées parallèles d'ébauches 101.

Dans le mode de réalisation des figures 2 à 6, une ébauche 101 comprend, dans son épaisseur, une première partie 102, une deuxième partie 104 et une troisième partie 106. La partie 102 est située entre la partie 104 et la partie 106 et est liée aux parties 104 et 106 par tissage 3D sauf au niveau de déliaisons 103a, 105a entre la partie 102 et la partie 104 et de déliaisons 103b, 105b entre la partie 102 et la partie 106. Les déliaisons 103a, 103b s'étendent sur toute la largeur de l'ébauche 101 (dimension en sens trame) à partir d'une extrémité 101a de l'ébauche 101 jusqu'à des fonds de déliaison 103c et 103d. Les fonds de déliaison 103c et 103d s'étendent entre les bords longitudinaux 101c et 101d de l'ébauche 101 suivant une direction faisant un angle non nul par rapport à la direction trame afin de respecter l'orientation de la plate-forme intérieure 14. Les déliaisons 105a, 105b s'étendent sur toute la largeur de l'ébauche 101 à partir de l'autre extrémité 101b de l'ébauche 101 jusqu'à des fonds de déliaison 105c et 105d. Les fonds de déliaison 105c et 105d s'étendent entre les bords longitudinaux 101c et 101d de l'ébauche 101 suivant une direction faisant un angle non nul par rapport à la direction trame afin de respecter l'orientation de la plate-forme extérieure 16.

En outre, une déliaison 102a est formée sensiblement au milieu de la partie 102, sur toute la longueur de l'ébauche 101 et à distance entre les bords longitudinaux 101c et 101d, entre des limites 102b et 102c. La déliaison 102a est destinée à permettre la formation du passage interne de la pale creuse de l'aube à fabriquer.

De façon bien connue, une déliaison est ménagée entre deux couches de fils de chaîne en omettant de faire passer un fil de trame à travers la zone de déliaison pour lier des fils de couches de chaîne situées de part et d'autre de la déliaison.

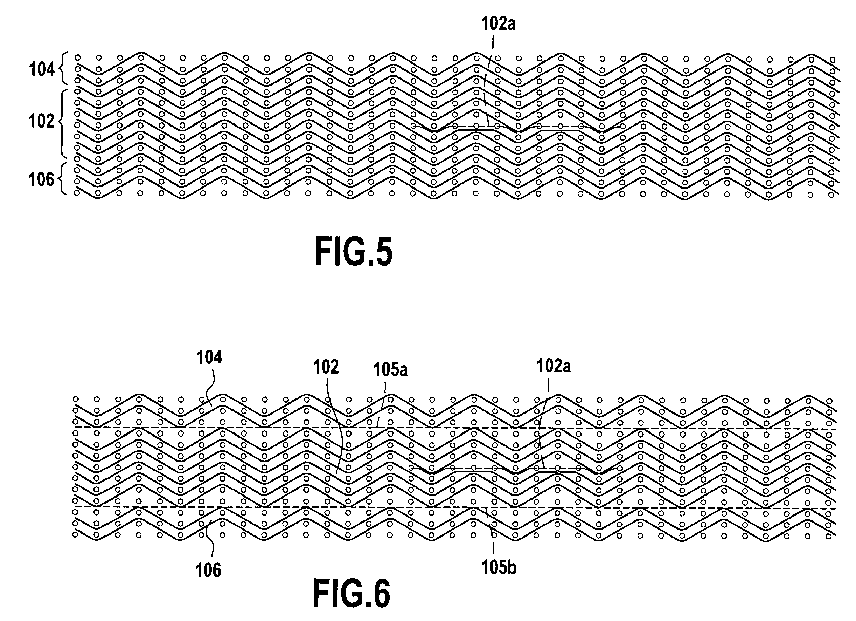

Les plans des figures 5 et 6 montrent un exemple de tissage 3D avec armure interlock et déliaisons 102a, 105a et 105b, les déliaisons 103a et 103b étant obtenues de la même façon que les déliaisons 105a et 105b. Sur les figures 5 et 6, les déliaisons sont représentées par des tirets. La partie 102 comprend une pluralité de couches de fils de chaîne (six dans l'exemple illustré) qui sont liées par tissage 3D sauf au niveau de la déliaison 102a. Les parties 104 et 106 comprennent chacune une pluralité de couches de fils de chaîne (trois dans l'exemple illustré) qui sont liées entre elles par tissage 3D. Hors la déliaison 102a, entre les fonds de déliaison 103c et 105c et entre les fonds de déliaison 103d et 105d, les couches de fils de chaîne des parties 102, 104 et 106 sont, dans l'exemple illustré, toutes liées entre elles.

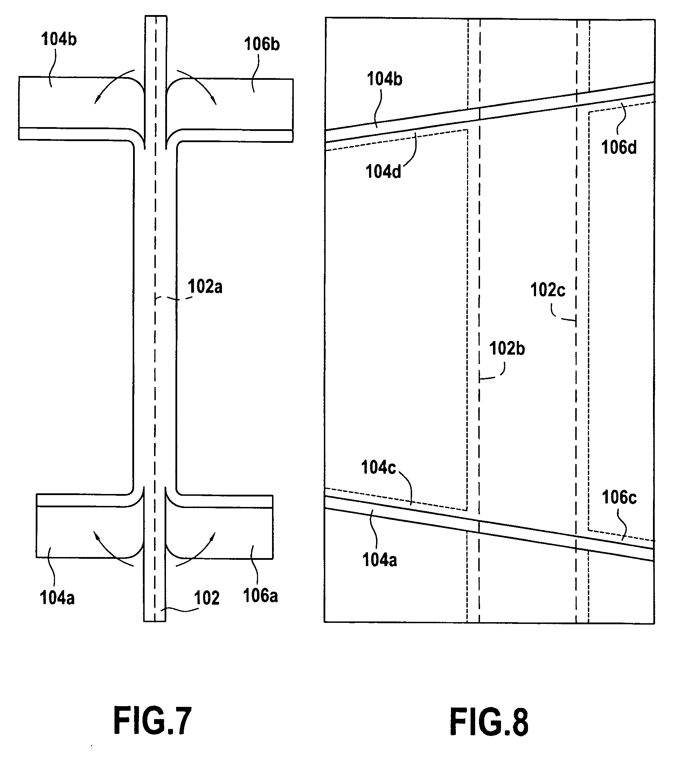

Après tissage, les segments 104a, 104b et 106a, 106b des parties 104, 106 non liées à la partie 102 sont dépliés comme montré sur la figure 7 en vue de former des parties de préforme pour les plates-formes 14, 16, les segments 104a, 104b étant adjacents aux déliaisons 103a, 105a et les segments 106a, 106b étant adjacents aux déliaisons 103b, 105b. Les dépliages sont réalisés au niveau des fonds de déliaison.

Ensuite, les découpes sont pratiquées suivant les lignes indiquées en pointillés sur la figure 8 pour éliminer les portions excédentaires, d'une part, dans les segments de la partie 102 situés du côté intérieur des segments dépliés 104a, 106a et du côté extérieur des segments dépliés 104b, 106b et, d'autre part, dans le segment de l'ébauche 101 s'étendant entre les segments dépliés, de manière à ne laisser que les parties utiles pour former une partie de préforme pour la pale de l'aube à fabriquer. De préférence, on laisse aussi subsister une liaison tissée entre les parties 102, 104 et 106 sur toute la largeur de l'ébauche 101 dans des zones s'étendant le long des raccordements des segments 104a, 104b, 106a, 106b avec le reste de l'ébauche, formant ainsi des cordons 104c, 106c et 104d, 106d. Cela permet de sécuriser la continuité de la liaison entre les segments 104a, 106a et entre les segments 104b, 106b. Des parties excédentaires de la partie 102 du côté intérieur des segments 104a, 106a et du côté extérieur des segments 104b, 106b peuvent aussi être éliminées par découpe.

On notera que le tissage 3D, lors du tissage de l'ébauche 101, pourrait être omis dans au moins une partie des portions éliminées par découpe.

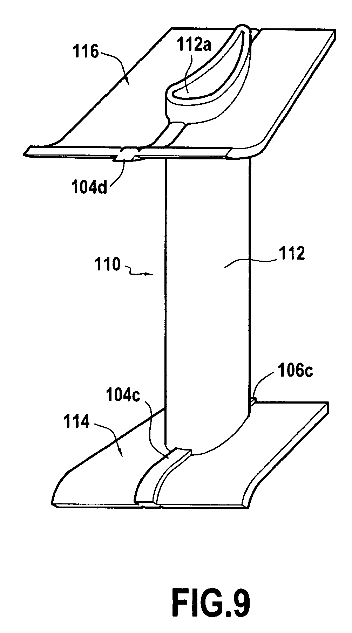

Une préforme fibreuse de l'aube à fabriquer est ensuite réalisée par moulage au moyen d'un outillage de conformation avec déformations pour obtenir le profil de pale creuse désiré et les formes désirées pour les plates-formes. On obtient une préforme 110 (figure 9) avec une partie 112 de préforme pour la pale creuse, et des parties 114, 116 de préformes pour les plates-formes intérieure et extérieure. Le passage interne 112a de la partie 112 de préforme pour la pale creuse est formé par introduction d'un élément d'outillage dans la déliaison 102a.

Une aube creuse en CMC telle que celle de la figure 1 peut être fabriquée de la façon suivante.

Une bande fibreuse 100 est tissée par tissage tridimensionnel, comprenant une pluralité d'ébauches fibreuses 101 orientées par exemple en sens chaîne, avec zones de déliaison, comme montré sur la figure 2. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibres du renfort fibreux et matrice en oxyde réfractaire). On pourrait aussi utiliser des fils de carbone pour un matériau CMC à renfort fibreux en carbone.

De façon connue, la bande fibreuse peut être traitée pour éliminer l'ensimage présent sur les fibres et la présence d'oxyde à la surface des fibres.

Egalement de façon connue, une mince couche de revêtement d'interphase de défragilisation peut être ensuite formée sur les fibres de la bande fibreuse par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

La bande fibreuse est ensuite imprégnée par une composition de consolidation, typiquement une résine précurseur de carbone ou une résine précurseur de céramique éventuellement diluée dans un solvant. Après séchage, les ébauches fibreuses individuelles sont découpées. Chaque ébauche est mise en forme (comme illustré par les figures 7 à 9) et placée dans un outillage pour conformation des parties de préforme de pale et de plates-formes intérieure et extérieure.

Ensuite, la résine est réticulée puis pyrolysée après avoir retiré la préforme de l'outillage de conformation pour obtenir une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation peut être formée par CVI, par exemple en PyC, BN ou BC. La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice autocicatrisante comprenant des phases de matrice en carbone pyrolytique PyC, en carbure de bore B₄C ou en système ternaire Si-B-C comme décrit notamment dans les documents US 5 246 756 et US 5 965 266. D'autres types de matrice céramique peuvent être envisagés, notamment des matrices en oxyde réfractaire, par exemple en alumine, en particulier pour des matériaux CMC de type oxyde/oxyde.

La densification est de préférence réalisée en deux étapes séparées par une étape d'usinage de l'aube à ses dimensions désirées notamment pour éliminer les nervures issues des cordons 104c, 106c, 104d et 106d, obtenir la forme finale désirée pour les plates-formes 14, 16 et éventuellement pour obtenir le profil désiré de la pale 12.

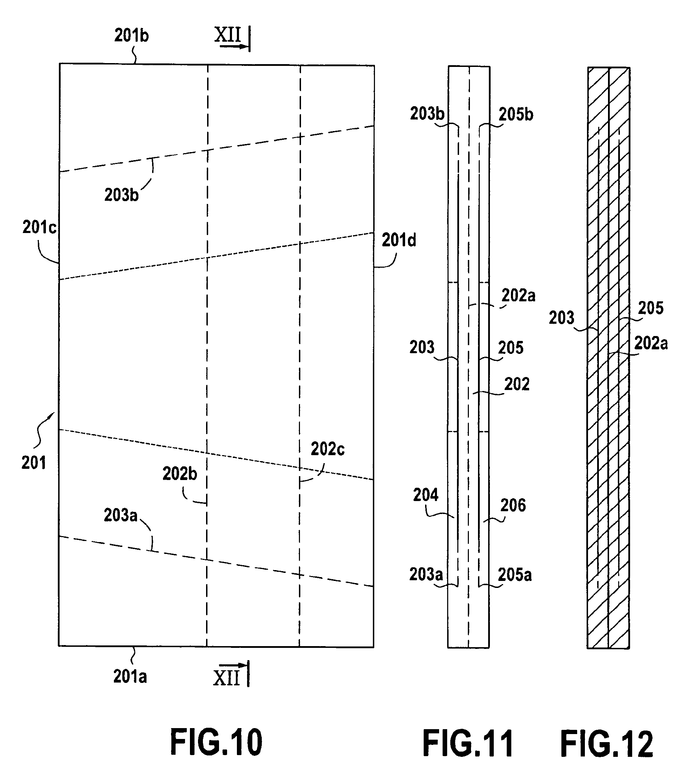

Un autre mode de réalisation d'une préforme fibreuse pour une aube du type de celle de la figure 1 sera maintenant décrit en référence aux figures 10 à 15.

Une ébauche 201, à partir de laquelle une préforme fibreuse d'aube peut être formée, est obtenue à partir d'une bande tissée par tissage 3D de façon similaire à la bande 100 de la figure 2.

L'ébauche 201 comprend dans son épaisseur une première partie 202, une deuxième partie 204 et une troisième partie 206. La partie 202 est située entre la partie 204 et la partie 206 et est liée aux parties 204 et 206 par tissage 3D sauf au niveau d'une déliaison 203 entre la partie 202 et la partie 204 et d'une déliaison 205 entre la partie 202 et la partie 206. Les déliaisons 203, 205 s'étendent sur toute la largeur de l'ébauche 201 et entre des fonds de déliaison 203a, 203b et 205a, 205b qui sont situés à distance des extrémités opposées 201a, 201b de l'ébauche 201. Les fonds de déliaison s'étendent entre les bords longitudinaux 201c, 201d de l'ébauche 201 suivant des directions faisant des angles non nuls par rapport à la direction trame afin de respecter les orientations des plates-formes intérieure et extérieure de l'aube à fabriquer.

En outre, une déliaison 202a est formée sensiblement au milieu de la partie 202, sur toute la largeur de l'ébauche 201 et à distance de ses bords longitudinaux 201c et 201d, entre des limites 202b et 202c. La déliaison 202a est destinée à permettre la formation du passage interne de la pale creuse de l'aube à fabriquer.

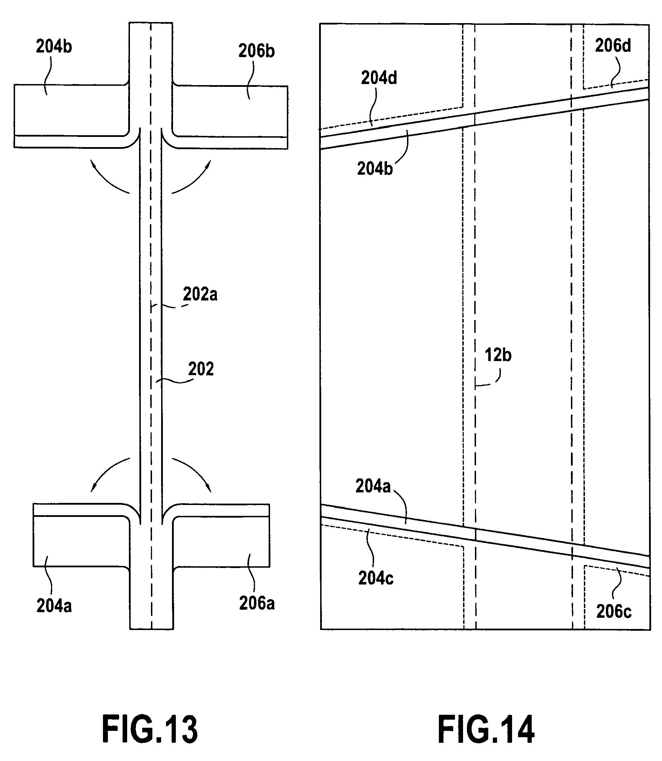

Après tissage, des segments 204a et 204b de la partie 204 adjacents à la déliaison 203 et s'étendant à partir des fonds de déliaison 203a, 203b sont dépliés comme montré sur la figure 13. De façon similaire, des segments 206a et 206b de la partie 206 adjacents à la déliaison 205 et s'étendant à partir des fonds de déliaison 205a, 205b sont dépliés comme montré sur la figure 13. Les dépliages sont réalisés au niveau des fonds des déliaisons.

Les segments 204a, 206a, d'une part, et les segments 204b, 206b, d'autre part, sont destinés à former des parties de préforme pour les plates-formes intérieure et extérieure de l'aube à fabriquer. Les longueurs des segments peuvent être limitées aux dimensions nécessaires à cet effet en éliminant par découpe des portions excédentaires des parties 204 et 206 dans les zones médianes de celles-ci, les lignes de découpe étant représentées en pointillés sur les figures 10 et 11.

Ensuite, des découpes sont pratiquées suivant les lignes indiquées en pointillés sur la figure 14 pour éliminer des portions excédentaires, d'une part, dans les segments de l'ébauche 201 situés du côté intérieur des segments dépliés 204a, 206a et du côté extérieur des segments dépliés 204b, 206b et, d'autre part, dans le segment de la partie 202 s'étendant entre les segments dépliés, de manière à ne laisser subsister que les parties utiles pour former la partie de préforme de la pale de l'aube à fabriquer. De préférence, on laisse aussi subsister une liaison tissée entre les parties 202, 204 et 206 sur toute la largeur de l'ébauche 201 dans des zones s'étendant le long des raccordements des segments dépliés avec le reste de l'ébauche, formant ainsi des cordons 204c, 206c, et 204d, 206d.

On notera que, lors du tissage de l'ébauche 201, un tissage 3D pourrait être omis dans au moins une partie des portions éliminées par découpe.

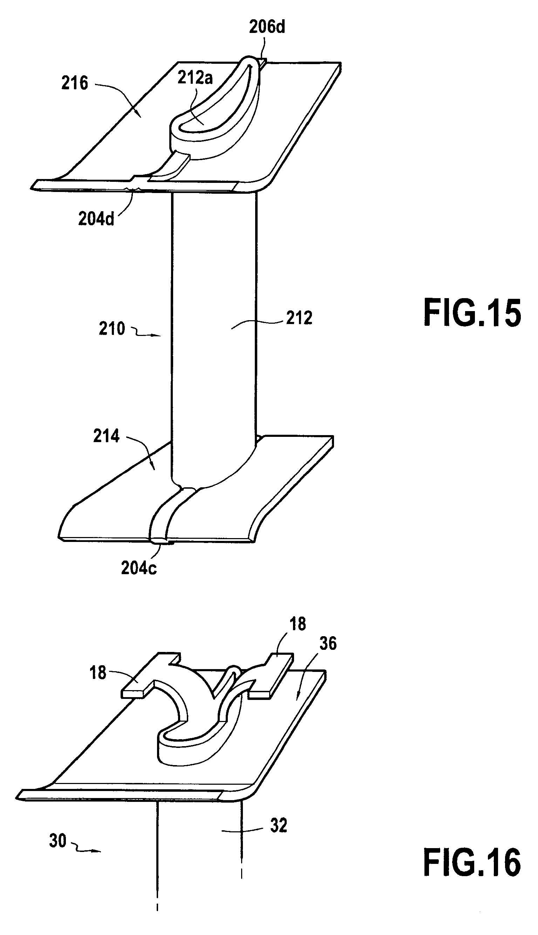

Une préforme fibreuse de l'aube à fabriquer est ensuite réalisée par moulage au moyen d'un outillage de conformation avec déformation pour obtenir le profil de pale creuse désirée et les formes désirées pour les plates-formes. On obtient une préforme 210 (figure 15) avec une partie 212 de préforme de pale creuse présentant un passage interne 212a, et des parties 214, 216 de préformes de plates-formes intérieure et extérieure.

Une aube creuse en CMC avec un renfort fibreux constitué par une préforme telle que la préforme 210 de la figure 15 peut être fabriquée comme décrit plus haut.

La figure 16 montre très schématiquement la partie extérieure d'une aube 30 de distributeur de turbine selon une variante de réalisation de l'aube 10 de la figure 1.

L'aube 30 comprend une pale creuse 32 solidaire d'une plate-forme intérieure (non représentée) et d'une plate-forme extérieure 36. L'aube 30 se distingue de l'aube 10 de la figure 1 en ce qu'elle comprend des crochets amont et aval 38 qui sont formés dans la continuité de la pale 32 du côté extérieur de la plate-forme extérieure 36.

A cet effet, lors de la réalisation de la préforme fibreuse de l'aube, la partie de l'ébauche fibreuse formant la préforme de pale est prolongée du côté extérieur au-delà de l'emplacement de la plate-forme extérieure et l'on met en forme ce prolongement, par découpes et déformations pour obtenir des parties de préforme correspondant aux crochets 18.

Les crochets 18 constituent des parties de montage de l'aube dans un carter de turbine.

Une disposition similaire peut être prévue du côté intérieur de l'aube en prolongeant la partie de l'ébauche fibreuse formant la préforme de pale du côté intérieur en-deçà de l'emplacement de la plate-forme intérieure, ce prolongement étant mis en forme par découpes et déformations pour obtenir des parties de préforme correspondant à des parties d'accrochage. De telles parties d'accrochage peuvent être utilisées pour une liaison avec un carter intérieur ou pour supporter un anneau portant un revêtement abradable.

On a envisagé ci-avant la réalisation d'une aube de distributeur de turbine en matériau CMC. L'invention est aussi applicable à des aubes de redresseur de compresseur. Pour de telles aubes, lorsque les températures rencontrées en service sont moins élevées, notamment pour les étages amont d'un compresseur, on peut utiliser non pas un matériau CMC, mais un matériau composite à matrice organique (CMO) réalisé avec des fibres par exemple de carbone ou de verre et une matrice polymère.

Dans ce cas, après tissage d'un ensemble de bandes fibreuses, découpe d'ébauches individuelles et mise en forme au moyen d'un outillage de conformation, comme décrit plus haut, chaque préforme d'aube obtenue maintenue dans son outillage est imprégnée par une résine par injection ou infusion. Un traitement thermique de réticulation de la résine est effectué pour obtenir une préforme d'aube. Plusieurs cycles successifs d'imprégnation par une résine et réticulation de celle-ci peuvent être réalisés. Un usinage final peut éventuellement être réalisé. La résine utilisée pour consolidation et densification est une résine précurseur de matrice polymère, telle qu'une résine époxyde, bismaléimide ou polyimide, par exemple.

En outre, bien que l'on ait envisagé la fabrication d'aubes à pales creuses, le procédé décrit convient aussi pour la réalisation d'aubes à pales pleines, la partie centrale de l'ébauche fibreuse destinée à former une préforme d'aube étant dans ce cas dépourvue de déliaison.

## Revendications

1. Procédé de fabrication d'une aube (10) de turbomachine en matériau composite ayant une pale (12) solidaire de plates-formes intérieure (14) et extérieure (16), le procédé comportant :
- la formation par tissage multicouches d'une ébauche fibreuse (101) ayant une direction longitudinale correspondant à celle de l'aube à réaliser et comprenant dans son épaisseur une première partie (102) avec plusieurs couches de fils liées entre elles par tissage, une deuxième partie tissée (104) et une troisième partie tissée (106), la première partie (102) étant située entre la deuxième partie (104) et la troisième partie (106) auxquelles elle est reliée par tissage sur une partie seulement de sa dimension longitudinale,
- la formation, à partir de l'ébauche fibreuse (101), d'une préforme (110) de l'aube à réaliser, par dépliage, de part et d'autre de la première partie (102), de segments (104a, 104b, 106a, 106b) de la deuxième partie (104) et de la troisième partie (106) non liés à la première partie (102), par mise en forme de la première partie (102) pour former une partie de préforme (112) pour la pale (12) de l'aube à réaliser et par mise en forme des segments dépliés de la deuxième partie et de la troisième partie pour former des parties de préforme (114, 116) pour les plates-formes intérieure (14) et extérieure (16) l'aube à fabriquer, et
- la densification de la préforme d'aube (110) par une matrice pour obtenir une aube (10) en matériau composite à plates-formes intérieure (14) et extérieure (16) intégrées.

2. Procédé selon la revendication 1, dans lequel la première partie (102) de l'ébauche (101) présente une zone interne de déliaison (102a) entre deux couches de fils adjacentes qui s'étend sur toute la dimension longitudinale de la première partie (102) de l'ébauche (101) et s'ouvre uniquement aux extrémités longitudinales de la première partie (102) de l'ébauche (101) de manière, après mise en forme, à former une partie de préforme (112) pour la pale creuse (12).

3. Procédé selon la revendication 1 ou la revendication 2, dans lequel les segments (104a, 104b, 106a, 106b) de la deuxième partie (104) et de la troisième partie (106) de l'ébauche non liés à la première partie (102) sont situés dans des parties d'extrémité longitudinale de la deuxième partie (104) et de la troisième partie (106) de l'ébauche (101).

4. Procédé selon la revendication 1 ou la revendication 2, dans lequel les deuxième et troisième parties (204, 206) de l'ébauche (201) sont liées par tissage à la première partie (202) de l'ébauche dans des parties d'extrémité longitudinale et les segments (204a, 204b, 206a, 206b) de la deuxième partie (204) et de la troisième partie (206) de l'ébauche (201) non liés à la première partie (202) de l'ébauche s'étendent entre lesdites parties d'extrémité longitudinale.

5. Procédé selon l'une quelconque des revendications 1 à 4, dans lequel la partie de préforme (112) pour la pale (12) a une largeur inférieure à celles des parties de préforme (114, 116) pour les plates-formes intérieure (14) et extérieure (16) et l'excédent en largeur de la première partie (102) de l'ébauche (101) est éliminé par découpe pour la mise en forme de la partie de préforme (112) pour la pale (12) tout en laissant subsister une liaison entre la deuxième partie (104) et la troisième partie (106) de l'ébauche (101), via une portion de la première partie (102) de l'ébauche (101), sur toute la largeur de l'ébauche, le long des raccordements desdits segments (104a, 104b, 106a, 106b) avec le reste de l'ébauche.

6. Procédé selon l'une quelconque des revendications 1 à 5, dans lequel, pour la réalisation d'une aube (30) de distributeur de turbine ou de redresseur de compresseur, l'on forme la préforme de l'aube avec un prolongement extérieur s'étendant au-delà de la partie de préforme pour la plate-forme extérieure (36) du côté extérieur de celle-ci et, lors de la réalisation de la préforme de l'aube, l'on met en forme le prolongement extérieur pour former une partie de préforme pour une partie de montage (18) dans un carter de turbine ou de compresseur.

7. Procédé selon l'une quelconque des revendications 1 à 6, dans lequel, pour la réalisation d'une aube de distributeur de turbine ou de redresseur de compresseur, l'on forme la préforme de l'aube avec un prolongement intérieur s'étendant en-deçà de la partie de préforme pour la plate-forme intérieure, du côté intérieur de celle-ci et, lors de la réalisation de la préforme de l'aube, l'on met en forme le prolongement intérieur pour former une partie de préforme pour une partie d'accrochage.

## Patentansprüche

1. Verfahren zur Herstellung einer Turbomaschinenschaufel (10) aus einem Verbundmaterial, die ein Blatt (12) aufweist, das mit einer inneren (14) und äußeren (16) Plattform fest verbunden ist, wobei das Verfahren Folgendes aufweist:
- das Bilden durch Mehrschichtweben eines Faserrohlings (101), der eine Längsrichtung aufweist, die jener des zu erstellenden Blattes entspricht, und in seiner Dicke einen ersten ersten Teil (102) mit mehreren Faserschichten, die durch Weben miteinander verbunden sind, einen zweiten gewebten Teil (104) und einen dritten gewebten Teil (106) aufweist, wobei der erste Teil (102) zwischen dem zweiten Teil (104) und dem dritten Teil (106) angeordnet ist, mit denen er durch Weben auf nur einem Teil von seiner Längenabmessung verbunden ist,
- das Bilden, ausgehend von dem Faserrohling (101) einer Vorform (110) des zu erstellenden Blattes durch Auseinanderfalten auf beiden Seiten des ersten Teils (102) von Segmenten (104a , 104b, 106a, 106b) des zweiten Teils (104) und des dritten Teils (106), die nicht mit dem ersten Teil (102) verbunden sind, durch Formen des ersten Teils (102), um einen Vorformteil (112) für das Blatt (12) der zu erstellenden Schaufel zu bilden, und durch Formen der auseinandergefalteten Segmente des zweiten Teils und des dritten Teils, um Vorformteile (114, 116) für die innere (14) und äußere (16) Plattform der zu erstellenden Schaufel zu bilden, und
- das Verdichten der Vorform der Schaufel (110) durch eine Matrize, um eine Schaufel (10) aus einem Verbundmaterial mit einer integrierten inneren (14) und äußeren (16) Plattform zu erhalten.

2. Verfahren nach Anspruch 1, wobei der erste Teil (102) des Rohlings (101) einen inneren Bereich des Trennens (102a) zwischen zwei benachbarten Faserschichten aufweist, der sich über die gesamte Längsabmessung des ersten Teils (102) des Rohlings (101) erstreckt und sich nur an den Längsenden des ersten Teils (102) des Rohlings (101) derart öffnet, um nach dem Formen einen Vorformteil (112) für das hohle Blatt (12) zu bilden.

3. Verfahren nach Anspruch 1 oder 2, wobei die Segmente (104a, 104b, 106a, 106b) des zweiten Teils (104) und des dritten Teils (106) des Rohlings, die nicht mit dem ersten Teil (102) verbunden sind, in Teilen der Längsenden des zweiten Teils (104) und des dritten Teils (106) des Rohlings (101) angeordnet sind.

4. Verfahren nach Anspruch 1 oder 2, wobei der zweite und dritte Teil (204, 206) des Rohlings (201) durch Weben mit dem ersten Teil (202) des Rohlings in Teilen des Längsendes verbunden sind und sich die Segmente (204a, 204b, 206a, 206b) des zweiten Teils (204) und des dritten Teils (206) des Rohlings (201), die nicht mit dem ersten Teil (202) des Rohlings verbunden sind, zwischen den Teilen des Längsendes erstrecken.

5. Verfahren nach einem der Ansprüche 1 bis 4, wobei der Vorformteil (112) für das Blatt (12) eine Breite aufweist, die niedriger als jene der Vorformteile (114, 116) für die innere (14) und äußere (16) Plattform ist, und der Breitenüberschuss des ersten Teils (102) des Rohlings (101) durch Schneiden für das Formen des Vorformteils (112) für das Blatt (12) beseitigt wird, wobei jedoch eine Verbindung zwischen dem zweiten Teil (104) und dem dritten Teil (106) des Rohlings (101) über einen Abschnitt des ersten Teils (102) des Rohlings (101) auf der gesamten Breite des Rohlings entlang der Verbindungen der Segmente (104a, 104b, 106a, 106b) mit dem Rest des Rohlings gelassen wird.

6. Verfahren nach einem der Ansprüche 1 bis 5, wobei zur Herstellung einer Schaufel (30) einer Turbinendüse oder eines Kompressorgleichrichters die Vorform der Schaufel mit einer äußeren Verlängerung gebildet wird, die sich über den Vorformteil für die äußere Plattform (36) auf der Außenseite davon erstreckt, und bei dem Herstellen der Vorform der Schaufel die äußere Verlängerung gebildet wird, um einen Vorformteil für einen Montageteil (18) in einem Turbinen- oder Kompressorgehäuse zu bilden.

7. Verfahren nach einem der Ansprüche 1 bis 6, wobei zur Herstellung einer Schaufel einer Turbinendüse oder eines Kompressorgleichrichters die Vorform der Schaufel mit einer inneren Verlängerung gebildet wird, die sich unterhalb des Vorformteils für die innere Plattform auf der Innenseite davon erstreckt, und bei dem Herstellen der Vorform der Schaufel die innere Verlängerung geformt wird, um einen Vorformteil für einen Einhakteil zu bilden.

## Claims

1. A method of fabricating a turbine engine vane (10) out of composite material, the vane comprising an airfoil (12) secured to inner (14) and outer (16) platforms, the method comprising the following steps:
• using multilayer weaving to form a fiber blank (101) having a longitudinal direction corresponding to the direction of the vane to be made and including in its thickness a first woven portion (102) with a plurality of yarn layers that are interlinked by weaving, a second woven portion (104), and a third woven portion (106), the first portion (102) being situated between the second portion (104) and the third portion (106) and being interlinked therewith by weaving over only a fraction of its longitudinal dimension;
• using the fiber blank (101) to form a preform (110) for the vane to be made, by folding out, on either side of the first portion (102), segments (104a, 104b, 106a, 106b) of the second and third portions (104, 106) that are not interlinked with the first portion (102), by shaping the first portion (102) to form a preform portion (112) for the airfoil (12) of the vane to be made, and by shaping the folded-out segments of the second and third portions to form preform portions (114, 116) for the inner and outer platforms (14, 16) of the vane to be fabricated; and
• densifying the vane preform (110) with a matrix to obtain a composite material vane (10) having incorporated inner and outer platforms (14, 16).

2. A method according to claim 1, wherein the first portion (102) of the blank (101) presents an internal non-interlinked zone (102a) between two layers of adjacent yarns that extends over the entire longitudinal dimension of the first portion (102) of the blank (101) and that is open solely at the longitudinal ends of the first portion (102) of the blank (101) in such a manner as to form, once shaped, a preform portion (112) for the hollow airfoil (12).

3. A method according to claim 1 or claim 2, wherein the segments (104a, 104b, 106a, 106b) of the second and third portions (104, 106) of the blank that are not interlinked with the first portion (102) are situated in longitudinal end portions of the second and third portions (104, 106) of the blank (101).

4. A method according to claim 1 or claim 2, wherein the second and third portions (204, 206) of the blank (201) are interlinked by weaving with the first portion (202) of the blank in longitudinal end portions, and the segments (204a, 204b, 206a, 206b) of the second and third portions (204, 206) of the blank (201) that are not interlinked with the first portion (202) of the blank extend between said longitudinal end portions.

5. A method according to any one of claims 1 to 4, wherein the preform portion (112) for the airfoil (12) has a width that is less than the widths of the preform portions (114, 116) for the inner and outer platforms (14, 16), and the excess width of the first portion (102) of the blank (101) is eliminated by being cut off in order to shape the preform portion (112) for the airfoil (12) while allowing interlinking to remain between the second and third portions (104, 106) of the blank (101), via a region of the first portion (102) of the blank (101), across the entire width of the blank along the connections of said segments (104a, 104b, 106a, 106b) with the remainder of the blank.

6. A method according to any one of claims 1 to 5, wherein, in order to make a vane (30) for a turbine nozzle or a compressor diffuser, the vane preform is formed with an outer extension extending beyond the preform portion for the outer platform (36), on its outside, and, while making the vane preform, the outer extension is shaped to form a preform portion (18) for a mounting portion for mounting in a turbine or compressor casing.

7. A method according to any one of claims 1 to 6, wherein, in order to make a vane for a turbine nozzle or a compressor diffuser, the vane preform is formed with an inner extension extending beyond the preform portion for the inner platform, on its inside, and, while making the vane preform, the inner extension is shaped to form a preform portion for an attachment portion.
